**Europäisches Patentamt**

**European Patent Office**

**Office européen des brevets**

(19)

(11) Publication number: **0 079 169**

**A1**

(12) # EUROPEAN PATENT APPLICATION

(21) Application number: **82305692.4**

(22) Date of filing: **27.10.82**

(51) Int. Cl.³: **G 05 F 1/70**
**H 02 P 7/62**

(30) Priority: **27.10.81 NZ 198762**

(43) Date of publication of application:
**18.05.83 Bulletin 83/20**

(84) Designated Contracting States:
**AT BE CH DE FR IT LI LU NL SE**

(71) Applicant: **STEADFOLD LIMITED**
**30 Artillery Lane**
**Bishopsgate London E1 7LT(GB)**

(72) Inventor: **Empson, Thomas Mark**
**53, Mackenzie Avenue**
**Christchurch(NZ)**

(72) Inventor: **Rutherford, John Gordon**
**299, Durham Street**
**Cristchurch(NZ)**

(74) Representative: **Sturt, Clifford Mark et al,**
**MARKS & CLERK 57-60 Lincoln's Inn Fields**
**London WC2A 3LS(GB)**

(54) **A power controller.**

(57) This invention provides a power controller for an electrical load (4) of variable power factor, comprising switching means (1, 2, 3) which control alternating currents supplied to the load (4), and control means (12-19) which control the non-conduction angle of the switching means (1, 2, 3) such that the non-conduction angle is proportional to an applied control reference voltage (f) and such that the non-conduction angle is substantially independent of the load power factor.

The power controller can improve the efficiency of a motor (4) when the motor is operating under reduced load conditions. The described power controller can also be used to adjust the applied voltage to the motor (4) in such a manner that the start current equals a preset current until the motor has reached full speed.

In one embodiment, efficiency of the motor is improved by monitoring the angle between the voltage and current zero crossing, comparing this monitored angle with a reference angle and controlling the voltage in such a manner as to maintain this angle equal to a preset angle for applied voltages less than full voltage.

FIG.1.

./...

FIG.2.

## A POWER CONTROLLER

The present invention relates to the control of voltage applied to inductive circuits of variable power factor.

Previous thyristor   voltage control systems have controlled the voltage applied to the load by phase delaying the thyristor   firing relative to the zero crossing of the applied voltage.

The voltage zero crossing referenced voltage regulators are satisfactory under conditions of resistive current flow as in heating or lighting loads on the output of the voltage regulator, or under conditions where the reactive component of the load current stays in the same proportion to the resistive component over the whole operating voltage range.

With the voltage zero crossing referenced A.C. voltage regulators, the non-conduction angle is equal to the voltage zero crossing referenced firing delay angle minus the load power factor angle. Such non-conduction angle is proportional to the control reference voltage minus a power factor offset voltage where the power factor offset voltage is an equivalent voltage proportional to the load power factor. A change in such load power factor without a change in the applied control reference voltage results in a change in the non-conduction angle of the A.C. switches and a corresponding change in the applied voltage.

A major application for the present invention is in induction motor control. The power factor exhibited by an induction motor is not constant but is a function of motor slip with large changes in power factor experienced for small changes in slip when the motor is within the normal operating speed range. The power factor increases with increasing speed from zero to a maximum at the slip of maximum operating efficiency. As the speed of the motor further increases, the power factor decreases. Induction. motors are, designed to operate in the region between the speed of maximum power factor and synchronous speed. A.C. voltage control in the normal operating region of induction motors using voltage zero crossing referenced firing delay is potentially regenerative. A constant firing delay angle in a voltage zero crossing referenced A.C. regulator applied to an induction motor coupled with a varying load supplies the motor with an A.C. voltage which varies with load. As the load presented to the motor is increased, the power factor of the motor is increased and thus the power factor angle is reduced resulting in a reduction in the conduction angle of the A.C. switches, thus reducing the applied voltage to the motor at a time when the voltage would normally be required to increase.

According to the present invention there is provided a power controller for an electrical load of variable power factor comprising switching means which control alternating current supplied to the load, and control means which control the non-conduction angle of the switching means such that the non-conduction angle is proportional to an applied control reference voltage and such that the non-conduction angle is substantially independent of the load power factor.

This invention provides electronic apparatus for controlling the voltage applied to lagging reactive loads.

Preferably, the switching means is in the form of triacs polarity opposed parallel connected silicon controlled rectifiers or other solid state switches, connected in series with the applied line voltage. The switches are controlled in a manner which minimises the effect on output voltage by variations in load power factor and this comprises control ensuring that the non-conduction angle is substantially independent of the load power factor.

A major advantage of the present invention is the ability to maintain improved A.C. voltage regulation when applied to a load of varying power factor without the need for complex voltage feedback and control reference voltage processing.

Particular embodiments of the invention are suitable for the electronic voltage control of inductively ballasted loads. Inductively ballasted loads can be in the form of lamps and discharge tubes. Various embodiments of the invention may provide electronic voltage control systems for minimising mechanical wear and energy consumption in the starting, running and protection of single and multi-phase induction motor powered machines and inductively ballasted electrical loads.

A preferred embodiment of the invention provides control of the angle between the current zero crossing and A.C. switch conduction initiation which contrasts with the conventional thyristor controlled voltage regulators in which the delay angle between the voltage zero crossing and A.C. switch conduction initiation is controlled.

Embodiments of the present invention will now be described by way of example only and with reference to the accompanying drawings, in which;

figure 1 is a block diagram of a power controller for a three phase load,

figure 2 is a block diagram of part of the controller of figure 1 as applied to one of the phases,

figure 3 illustrates circuitry which both monitors the angle between the voltage and zero crossings and generates a pulse stream with a mark to space ratio dependent upon the monitored angle,

figure 4 illustrates circuitry which generates the control voltage signal derived from the difference between the sum of the phase angle signals and the preset reference angle,

figure 5 illustrates circuitry which generates the control voltage signal derived from the difference between the sum of current magnitudes and the reference current, and

figure 6 illustrates an alternative embodiment which utilises a voltage synchronised time reference and power factor derived control voltage offset

A first embodiment of the invention comprises a switching means in each phase or in sufficient phases to provide complete control of the alternating current supplied to the load. Each switching means is controlled by trigger signals such that conduction is initiated by the application of the trigger signals and such that current conduction ceases on cessation of load current flow. Monitor means are provided whereby the polarity of current flow or potential current flow is monitored in order to generate a current polarity dependent signal. Further monitor means are provided for monitoring the applied phase voltage polarity and generating a voltage polarity dependent signal. The embodiment includes means for generating a time reference signal representative of the time elapsed from the last current zero crossing, therebeing one such time reference signal per controlled phase. Also included is a means for generating a time reference signal representative of the time elapsed from the last voltage polarity reversal, therebeing one such time reference signal per controlled phase. The embodiment having a control means for generating the trigger signals for the A.C. switching means, such control means being responsive to the comparison between a control voltage and the time reference signals. The control means is initially responsive to the voltage polarity reversal time reference signals so as to establish initial current flow and thereafter the control means are responsive to the current polarity reversal time reference signals.

The control reference voltage directly controls the non-conduction angle of each A.C. switching means, such non-conduction angle being independent of load power factor. The trigger signals are applied to the A.C. switching means at a delay angle from the current cessation for that switching means and the delay angle is proportional to the control reference voltage.

The control voltage is common to all controlled phases, resulting in equal control on all phases maintaining applied voltage and load current balance.

In its application to multiphase loads, the embodiment ensures that all phases are controlled equally and the maximum non-conduction angle may be restricted to an angle such that a conduction overlap between a minimum of two phases is maintained. Limitation of the non-conduction angle is achieved by means of a maximum voltage regulator associated with the control reference voltage circuitry.

This embodiment can provided reduced current starting and efficiency improved characteristics.

The following description explains one application in which two features of the invention are described. The voltage control system is used to control the starting voltage applied to an A.C. induction motor and the voltage control system is used to improve efficiency of the induction motor under conditions of varying load.

The load applied to an induction motor is monitored by means of the voltage and current zero crossings and a control voltage dependent upon the angle between the zero crossings is derived. This control voltage is used to control the voltage applied to the motor for improved motor efficiency.

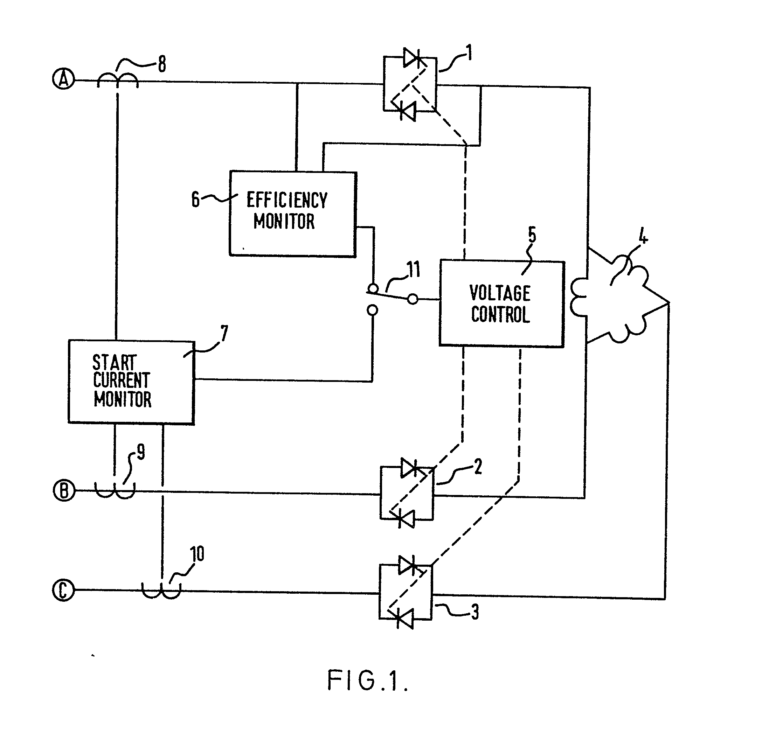

As depicted in figure 1, three semi-conducutor A.C. switches comprising reverse parallel connected silicon controlled rectifiers 1, 2 and 3 are used to control the current in each phase of a three phase delta configured motor 4. The voltage control section 5 controls the non-conduction angle of the A.C. switches 1, 2 and 3 and thus controls the voltage applied to the motor.

During the starting period, the voltage controller 5 is connected to the start current monitor 7 which monitors the current during starting, compares the monitored current with a preset current and signals the voltage controller 5 to adjust the applied voltage to the motor in such a manner that the start current equals the preset.

current until the motor has reached full speed

The normal run operation of the controller requires the connection of the voltage controller to the efficiency monitor 6 which monitors the motor efficiency and signals the voltage controller in a manner that causes the motor to operate at improved efficiency under reduced load conditions.

The start current is monitored by means of current transformers 8, 9 and 10 and the mode switch 11 is controlled by the circuitry.

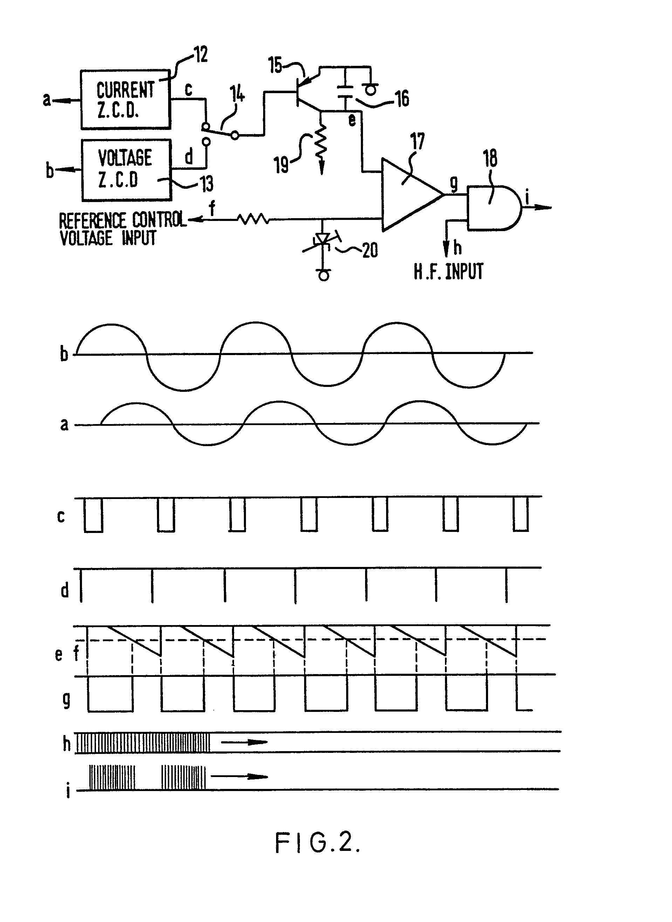

As depicted in figure 2, the current zero crossing detector 12 monitors the current in the controlled phase. The voltage zero crossing detector 13 monitors the applied phase voltage. Transistor 15 is used for ramp reset on command from the zero crossing detectors. The ramp is generated by charging a capacitor 16 by current from a resistor 19. The ramp waveform generated is shown as waveform "e". A comparator 17 compares the ramp voltage with a control voltage "f" and outputs a firing gating signal "g". The firing gating signal is used to gate a high frequency waveform "h" via gate circuit 18 to output a firing signal "i" for amplification and application to the gate of the A.C. switch.

The ramp generator 15, 16, 19 is initially controlled by a switch 14 by the voltage zero crossing detector 13 which

outputs a pulse "d" at each applied zero voltage crossing.

When current begins to flow, the ramp generator is controlled by the current zero crossing detector 12 which outputs a voltage before the current zero, resetting the ramp and holding the bias on the reset transistor 15 until the current zero crossing. Thus the ramp voltage increases in magnitude from the time of current zero crossing. The current and voltage zero crossing detectors may be combined in some applications in such a manner that the ramp is reset on the voltage zero crossing and released on the current zero crossing for current zero crossings between zero and ninety degrees after the voltage zero crossing.

A shunt voltage regulator 20 and limiting resistor in the control voltage circuit limit the maximum excursion of the control voltage and is adjusted to allow a maximum non-conduction angle of less than 120 degrees, thus maintaining conduction overlap between a minimum of two phases.

The limited control voltage and the high frequency waveform "h" are common to all phases with the other circuitry and waveforms shown in figure 2 being particular to each phase.

The algorithm used to determine the motor efficiency for the purposes of efficiency improvement in the controller here described, is to monitor the angle between the voltage and current zero crossings, compare this monitored angle with a reference angle and control the voltage in such a manner as to keep this angle equal to the preset angle for applied voltages less than full voltage.

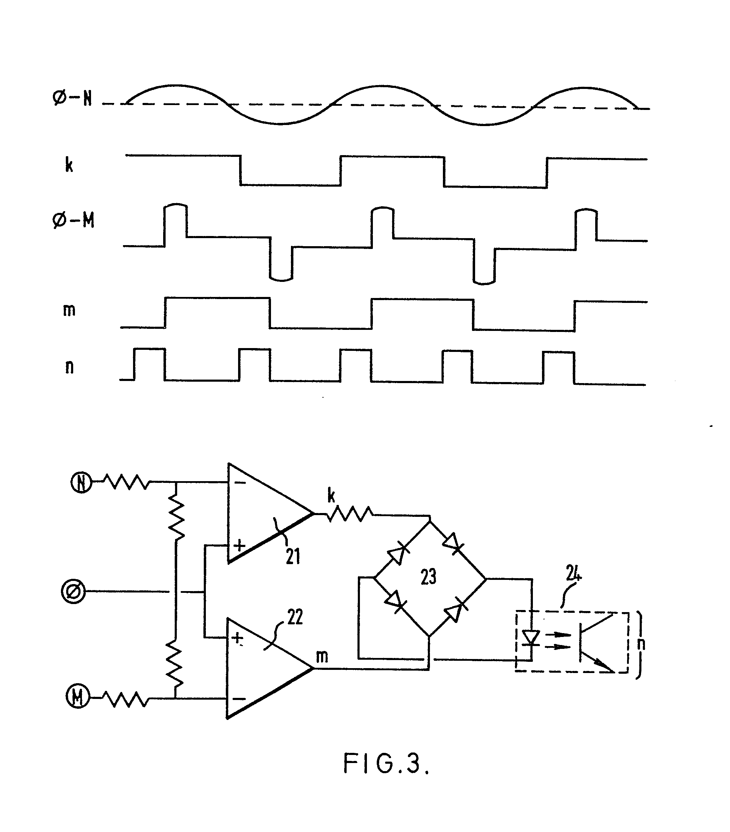

As depicted in figure 3 the comparator 21 monitors the applied phase voltage and outputs a square waveform "k" in phase with the applied phase voltage. The voltage across the solid state switches is monitored by comparator 22 outputing a square wave "m" in phase with the current flow. The two waveforms "k" and "m" are exclusive OR'd by the circuit using the full wave bridge 23 and optical isolator 24. The output waveform from the opto isolator is shown as "n".

The three pulse streams representative of the angles between the voltage and current zero crossings for each phase are combined, filtered and compared with a preset reference. The error is integrated and applied to the voltage controller.

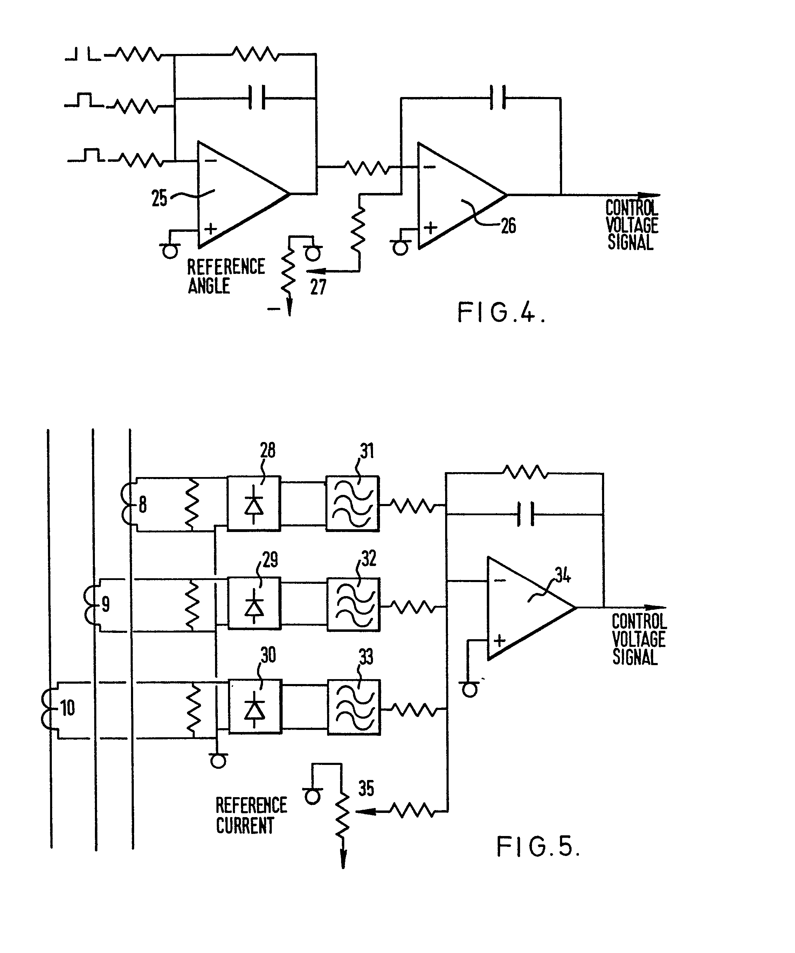

As is shown in Figure 4, operational amplifier 25 combines the three pulse streams and filters them, to generate a D.C. voltage representative of the average angle between the voltage and current zero crossings. Operational amplifier 26 compares the average monitored angle with a reference angle preset by potentiometer 27, intergrates the error, and outputs the result to the voltage controller.

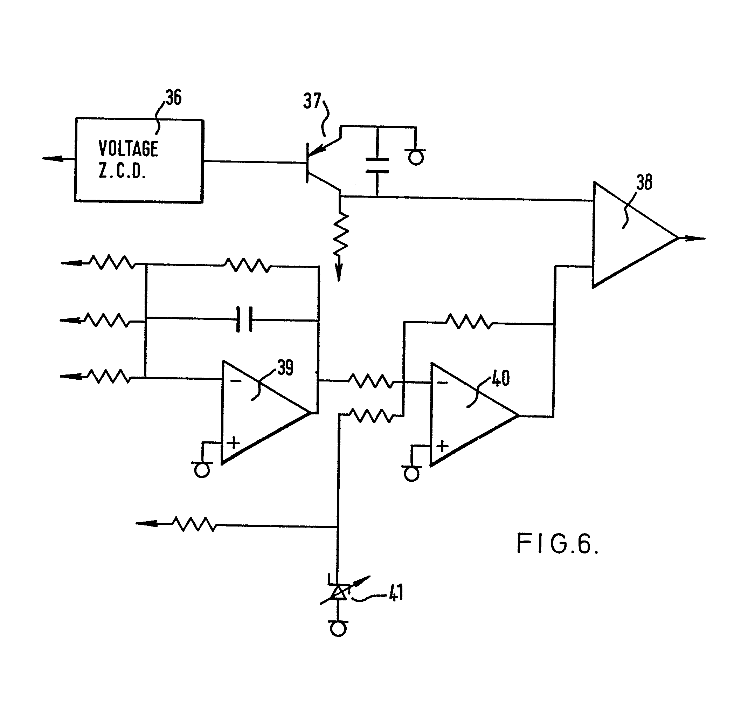

Reduced current starting is achieved by monitoring the current during starting by rectifying the output of current transformers 8, 9, 10 with rectifiers 28, 29 and 30 as shown in figure 5. The rectified outputs are filtered and combined and the sum compared with a reference voltage preset by potentiometer 35. The difference between the monitored current and the reference is integrated by operational amplifier 34 to generate a control voltage signal which controls the non-conduction angle of the solid state switches during starting in a manner such that if the monitored current exceeds the reference current, the non-conduction angle is increased, or if the monitored current is less than the reference current, the non-conduction angle is reduced thus causing a constant start current to be maintained equal to the preset reference.

An alternative approach to the system here described but achieving the same result is to time reference the thyristor firing delay from the voltage zero crossing and offset the reference control voltage by a voltage proportional to the instantaneous power factor of the load. This technique can be used to achieve the same result as the detailed description above provided the following contraints are met.

1) The control votage must be offset by a voltage $V_{pf}$ which is proportional to the load power factor and the magnitude of $V_{pf}$ must be such that it delays the firing angle by an angle equal to the load power factor angle for all values of power factor presented by the load.

2) The monitoring of power factor must be a sampled and filtered system and as such necessitates a slower response than a current zero crossing time referenced firing delay system. However, for slow changes in load power factor, the result is still that of controlling the non-conduction angle of the solid state A.C. switches by the D.C. control reference voltage. Such control reference voltage is proportional to the non-conduction angle of the solid state A.C. switches rather than the firing delay angle. Such an alternative system is shown in figure 6. The voltage zero crossing detector 36 monitors the applied phase voltage and generates reset pulses on every voltage zero crossing to reset the ramp generator 37.

Reference numeral 39 designates the composite power factor summer and filter. The control reference voltage is limited by the shunt regulator 41 to a voltage less than than representative of a non-conduction angle of 120 degrees and is combined with the power factor offset by the operational amplifier.

The composite control voltage is compared with the time reference ramp by comparator 38 and controls the A.C.

switch firing as described before.

The principles herein described are applicable to both single phase and multiphase control systems and may be applied to multiphase systems with or without neutral connection. For multiphase sustems with the neutral connected to the centre of the load impedance, the shunt regulator in the reference control system can be deleted as there is no necessity to maintain a conduction overlap between two or more phases.

CLAIMS

1. A power controller for an electrical load (4) of variable power factor, characterised by switching means (1, 2, 3) which control alternating current (a) supplied to the load (4), and control means (12-19) which control the non-conduction angle of the switching means (1, 2, 3) such that the non-conduction angle is proportional to an applied control reference voltage (f) and such that the non-conduction angle is substantially independent of the load power factor.

2. A power controller as claimed in claim 1 and for use with a multi-phase load (4), characterised in that the switching means comprises a number of switching units (1, 2, 3) each connected in a respective phase of the load (4) and each being capable of conduction of the full load current for at least part of each cycle of the applied voltage.

3. A power controller as claimed in claim 2 and for use in a non-neutral connected multi-phase system, characterised by control reference voltage limitation means (20) which limit the non-conduction angle such that a conduction overlap is maintained between two or more controlled switching units (1, 2, 3).

4. A power controller as claimed in any preceding claim, characterised in that the switching means or each

- 15 -

0079169

switching unit (1, 2, 3) comprises a solid state bi-directional switch arranged to remain in a non-conducting state until triggered and to then conduct until current flow through the switch falls to zero.

5.    A power controller as claimed in claim 4, characterised in that the control means (12-19) includes voltage zero crossing detector (13) for each switch (1, 2, 3), the detectors (13) each generating a signal (d) at each zero crossing of the applied voltage (b) of the respective phase.

6.    A power controller as claimed in claim 4, characterised in that the control means (12-19) includes a ramp generator (15, 16, 19) and comparator (17) for each switch (1, 2, 3), each ramp generator (15, 16, 19) generating a time reference ramp voltage (e) in which the instantaneous voltage is representative of the angle or time elapsed from the reference ramp reset/release signal (c, d) and the respective comparator (17) comparing the ramp voltage (e) with the control reference voltage (f).

7.    A power controller as claimed in claim 6, characterised by a firing signal generator circuit (18), the output of each comparator (17) being used to control the firing signal generator circuit (18) which triggers the respective switch (1, 2, 3) into conduction when the magnitude of the ramp voltage (e) exceeds the magnitude of the control reference voltage (f).

8.    A power controller as claimed in claim 6 or 7, characterised by a zero current detecting means (12) for detecting zero current flow in each switch (1, 2, 3) the output from the zero current detecting means (12) being arranged to reference the respective ramp generator (15, 16, 19) such that the instantaneous ramp voltage (e) is representative of the angle or time elapsed from the cessation of current flow in the switch (1, 2, 3).

9.    A power controler as claimed in claim 1, characterised in that the control means (36-40) offsets the control reference voltage by an offset voltage which is proportional to the load power factor such that the delay angle in the switching means (1, 2, 3) due to the said offset voltage is equal to the angle between the voltage and current zero crossings and in which the offset control reference signal is compared with a time reference ramp which is synchronised by a voltage zero crossing detector (36).

10.    A power controller as claimed in claim 1 or 9 and for use in a non-neutral return multi-phase system, characterised by a shunt voltage regulator (20,41) which is set to limit the control voltage to a maximum such that the maximum non-conduction angle is less than that required to maintain a conduction overlap betwen two or more phases.

11.    A power controler as claimed in claim 10 and for use in a three-phase three-wire system, characterised in that the shunt regulator limits the non-conduction angle to less than $120^{\circ}$.

FIG.1.

FIG.2.

FIG.3.

FIG.4.

FIG.5.

FIG.6.

# EUROPEAN SEARCH REPORT

**European Patent Office**

**0079169**

Application number

EP 82 30 5692

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A-2 073 921 (E.YRISARRI, J.J. SULLIVAN) *Page 3, lines 51-77; figure 4; page 4, line 51 - page 6, line 8; figures 5,6,7* | 1,2,4-8 | G 05 F 1/70 H 02 P 7/62 |
| Y | WO-A-8 002 895 (SCOTT & FETZER) *Page 18, lines 2-15; figures 1,2; page 24, line 21 - page 25, line 20; figure 3* | 1,2,4-8 | |
| A | US-A-4 052 648 (NASA) *Column 1, lines 55-68* | 1,2,4-7 | |
| A | US-A-4 266 177 (NASA) *Column 1, line 51 - column 2, line 2* | | TECHNICAL FIELDS SEARCHED (Int. Cl. ³) G 05 F H 02 P |

The present search report has been drawn up for all claims

| Place of search THE HAGUE | Date of completion of the search 26-01-1983 | Examiner HOUILLON J.C.P.L. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82